# EUROPEAN PATENT APPLICATION

(11) **EP 0 784 351 A1**
(43) Date of publication of application: **16.07.1997**
(21) Application number: 95929267.3
(22) Date of filing: 14.08.1995
(51) Int. Cl.: H01M 4/52

(54) **METHOD OF MANUFACTURING ELECTRODES FOR CHEMICAL CURRENT SOURCES**

(71) Applicant: Aktsionernoe Obschestvo Zakrytogo Tipa "Elton", Moscow, 117924 (RU)
(72) Inventor: VARAKIN, Igor Nikolaevich, Saratov, 410017 (RU); STEPANOV, Aleksei Borisovich, Saratov, 410003 (RU); MENUKHOV, Vladimir Vasilievich, Saratov, 410015 (RU)
(74) Representative: Zellentin, Rüdiger
(86) International application number: PCT/RU95/00170
(87) International publication number: WO 97/07554

(57) **Abstract**

The invention pertains to electrical engineering and can be used in the manufacture of metal-plated polymer fibre electrode substrates for use in chemical current sources. The aim of the invention is to allow the substitution of less scarce materials for palladium and tin during the operations preceding the chemical metal plating of the polymer fibre material. This is achieved by using a cation-exchanging material with a cation exchange capacity of 0.5-6 mg. equ./g as the fibrous material, and, before the metal plating process, saturating the polymer material with nickel ions and treating it with an aqueous solution of an alkali metal borohydride.

## Description

### TECHNICAL FIELD

The present invention relates in general to processes for producing electrodes for chemical sources of electric energy, predominantly for electrodes of storage batteries. More specifically the invention relates to a process for producing electrodes having a polymer material as the base thereof. The invention also comprises the electrodes produced by the process according to the invention.

### BACKGROUND OF THE INVENTION

Polymer-based electrodes for chemical sources of electric energy are generally known, e.g. from FR-A-2 472 842. According to said patent application the electrode is made of a metallized substrate on which an active material is deposited.

One of the known processes for producing such electrodes disclosed in DE-A1- 40 04 106 consists in preliminary activating the substrate made of polymer materials, in particular, an unwoven web from polyolefinic fibres, in a solution containing tin and palladium, followed by coating the substrate with nickel by chemical formation and electroplating.

However, the aforesaid known process for producing polymer-based electrodes suffers from several disadvantages. First of all due to the highly developed surface of the polymer fibres the highly expensive palladium for activating the fibrous polymer material must be used in a large amount.

Moreover, during the subsequent formation of a metal coating on the thus-preconditioned material palladium particles may be passed over from the polymer surface into the metallization solution. As a result decomposition of the solution takes place.

### SUMMARY OF THE INVENTION

The main object of the present invention is to provide a novel process for producing polymer-based electrodes, wherein use of expensive materials can be avoided.

The foregoing object is achieved by the use of cation-exchange fibrous materials that hitherto have not been used for this purpose. This feature makes it possible to activate the surface by saturating it with the ions of the same metal, i.e. nickel, which is used for subsequent coating of the substrate.

The technology based on the process for producing electrodes according to the present invention is as follows. A fibrous polymer material having a cation-exchange capacity of from 0.5 to 6.0 mVal/g is used. The material can be pretreated with a sodium bicarbonate solution.

As sources of nickel ions may be used a nickel sulphate solution, wherein the polymer is kept for a period of time necessary for the material to be saturated with nickel ions. Thereupon the material activated with nickel ions is treated with an aqueous solution of an alkali metal boron hydride having a concentration of from 0.1 to 1.2 g/l at a temperature of from 15 to 70°C for 0.5 to 30 minutes. As a result, the sorbed nickel is reduced.

Then the thus-treated material is nickel-coated by conventional chemical formation and electroplating techniques.

### PREFERRED EMBODIMENT OF THE INVENTION

The essence of the present invention will be illustrated by the following example.

### EXAMPLE

As polymer fibrous cation-exchange material was used an unwoven needle-pierced felt based on radiation-grafted polypropylene having a nickel-exchange capacity of 5 mVal/g, a fibre diameter of 36 µ, a porosity of 87 %, and a thickness of 5 mm. The aforesaid material was placed in a 2 % aqueous sodium bicarbonate solution and kept therein for an hour, whereupon the material was washed with deionized water and saturated with nickel ions by treatment with a 3 % nickel sulphate solution for half an hour. After having been washed the nickel-saturated material was treated with a sodium boron hydride solution with a concentration of 0.5 g/l for 15 minutes at a temperature of 30°C.

After having been treated as described above the material turns into a dark-grey colour. The thus-activated material was chemically nickel-coated at room temperature in a solution of the following composition, g/l:
nickel sulphate - 50
ammonium chloride - 35
sodium hypophosphite - 40
ammonia - to pH = 9.

Then the material was nickel-plated in a standard Watts electroplating bath until a nickel content of 0.5 g/cm³ was obtained. The characteristics of the thus-produced electrode base are given in the Table below.

As comparison the Table also comprises the characteristics of the material used by the firm Norreske as electrode base.

**TABLE**

| Parameter | Parameter Values | |
|---|---|---|
| | Electrode base according to the Example given above | Prior Art electrode base (Norreske) |
| Porosity, % | 84,1 | 83,4 |
| Surface, cm³/g | 280 | 221 |
| Coating thickness, µ | 3,8 | 5,2 |
| Mean diameter, µ | 150 | 134 |
| Mean diameter of fibres, µ | 46,5 | 38,5 |

From the Table given above follows that the most important electrode characteristics of the base prepared according to the invention and the prior art electrode base available from Norreske are close to each other.

## Claims

1. Process for producing electrodes for chemical sources of electric energy, in which as electrode base is used a fibrous polymer material whose surface is activated and then metallized with nickel, **characterized in** that as base a cation-exchange fibrous polymer material is used, the surface thereof being activated by saturation with nickel ions.

2. A process according to claim 1, **characterized in** that a cation-exchange fibrous polymer material having a cation-exchange capacity of 0,5 to 0,6 mVal/g is used.

3. A process according to claim 1 or 2, **characterized in** that saturation of the poymer material with nickel ions is effected by keeping it in a nickel-sulphate solution.

4. A process according to claims 1-3, **characterized in** that prior to be fed to the nickel sulphate solution the polymer material is kept in an aqueous sodium bicarbonate solution followed by washing with deionized water.

5. A process according to claims 1-4, **characterized in** that the cation-exchange poymer material activated with nickel ions is treated with a solution of an alkali metal boron hydride.

6. A process according to claim 5, **characterized in** that the polymer material saturated with nickel ions is treated with an aqueous solution of sodium boron hydride having a concentration of 0,1 - 1,2 g/l at a temperature of 15 - 70°C for 0,5 - 30 minutes.

7. An electrode for a chemical source of electric energy produced according to the process according to any one of claims 1-6.

8. A chemical source of electric energy, comprising at least one electrode produced according to the process according to any one of claims 1-6.
